# EUROPEAN PATENT SPECIFICATION

(11) **EP 2 503 883 B1**
(45) Date of publication and mention of the grant of the patent: **02.03.2016**
(21) Application number: 10792817.8
(22) Date of filing: 23.11.2010
(51) Int. Cl.: A01N 37/36, A01N 47/44, A01P 1/00

(54) **DISINFECTANT COMPOSITION**
DESINFIZIERENDE ZUSAMMENSETZUNG
COMPOSITION DÉSINFECTANTE

(30) Priority: 24.11.2009 EP 09014610
(43) Date of publication of application: 03.10.2012
(73) Proprietor: Fresenius Medical Care Deutschland GmbH, 61352 Bad Homburg v.d.H. (DE)
(72) Inventor: KIRSCHNER, Ulrich, 61350 Bad Homburg v.d.H. (DE)
(74) Representative: Bülle, Jan
(86) International application number: PCT/EP2010/007082
(87) International publication number: WO 2011/063928

(56) References cited:
- EP-A1- 0 707 794
- EP-A1- 1 688 154
- EP-A2- 1 943 302
- WO-A1-2009/085318
- US-A- 5 576 006
- US-A- 5 700 742
- US-A1- 2003 096 722
- US-A1- 2007 098 813

## Description

### FIELD OF THE INVENTION

The invention relates to the use of a disinfectant composition as a catheter lock solution, wherein the composition is a solution and (i) comprises a combination of citric acid or a physiologically acceptable salt thereof as component (A), and poly(hexamethylenebiguanide) (PHMB) or a physiologically acceptable salt thereof as component (B), wherein components (A) and (B) are present in an amount exhibiting a synergistic anti-microbial effect; and wherein the disinfectant composition exhibits a synergistic activation of its bacterio-static and fungistatic activity always in the presence of organic load (protein and blood), preferably (ii) a log reduction of *staphylococcus aureus* of at least 4.0 after a contact time of 5 minutes according to DIN EN 13727. The invention relates to the use of said composition for the prevention and/or reduction and/or elimination and/or eradication of microbial contaminations and biofilm formation in catheters.

### BACKGROUND ART

The effective prevention and/or the reduction and/or elimination and/or eradication of contaminations, e.g. of microbial contaminations such as bacterial contaminations, is still a great challenge in the field of medicine and healthcare. These contaminations may arise on the surface or inside of objects, for example of medical and healthcare products such as catheters, in fluids used in conjunction with these products, and in humans and animals.

Commonly used disinfectants, i.e. anti-microbial agents that inhibit, reduce, eliminate and/or eradicate microbes such as bacteria include for example alcohol solutions. However, these solutions usually have to be applied in high concentrations and, therefore, cannot be administered other than topically.

Other disinfectants or disinfectant compositions known in the state of the art are for instance disclosed in EP 0 180 309 A1, EP 0 265 202 A2, EP 0 456 467 A2, WO 2004/093545 A1 and WO 2005/115 487 A1 and may *inter alia* include either citric acid (or a salt thereof) or poly(hexamethylenebiguanide) (PHMB), which is a broad-spectrum disinfectant known in the state of the art.

A variety of medical conditions and procedures requires the administration and/or removal of fluids to animals and humans. Catheters provide an easy access for the short- or long-term administration of these fluids such as nutrients, drugs, electrolytes, etc. by infusion, and further for the withdrawal of blood or the removal of urine.

Since the implantation and the removal of a catheter is a painful procedure for the patient and further, due to a possible trauma at the area of catheter insertion, catheters, especially those which have to remain implanted for a longer period of time (e.g. for dialysis), cannot be removed and renewed frequently.

After use, the catheter is usually flushed with a saline solution and then filled with a "catheter lock solution" containing an agent having anti-coagulant properties following flushing which remains in the catheter during periods of non-use in order to "lock" the catheter, i.e. to prevent blood from clotting in the inside and, to make sure that no blood backs up into the catheter. Conventionally used catheter lock solutions are heparin containing solutions. However, besides its anti-coagulant activity heparin has no anti-microbial activity.

Catheters, especially those implanted for a long-time use, and especially the inside of catheters, are a possible source of contamination since a catheter may provide a direct access to a patient's blood stream. It is, therefore, necessary that the catheter lock solution contains an additional agent displaying anti-microbial properties in an anti-microbial effective amount. Further, since microbes can grow on the foreign surface of an implanted catheter yielding a deposit, i.e. a "biofilm" which in turn may protect microbes within that film, especially bacteria within a deeper layer of the biofilm, it is necessary that the anti-microbial agent is not only able to kill the free-floating microbes in solution, but also to penetrate the deposit in order to kill these microorganisms in the deeper layers and to prevent the formation of such biofilms, respectively.

*Staphylococcus aureus* plays a central role in bacterial diseases and infections. It can cause a range of illnesses from minor skin infections, such as impetigo, pimples, furuncles, carbuncles, scalded skin syndrome and abscesses, to life-threatening diseases such as meningitis, pneumonia, endocarditis, osteomyelitis, toxic shock syndrome (TSS), and septicemia. Its incidence is from skin, soft tissue, respiratory, bone, joint, endovascular to wound infections. It is still one of the five most common causes of nosocomial infections, often causing postsurgical wound infections.

Recently, there have been a myriad of reported cases of *S. aureus* in hospitals across the world. The pathogen has had facilitated transportation in medical facilities mainly because of insufficient healthcare worker hygiene. The bacterium is able to transport itself on the hands of healthcare workers who, for instance, get the bacteria from a seemingly healthy patient carrying a strain of the pathogen and then pass it on to the next patient being cared for. Introduction of the bacterium into the bloodstream can lead to various complications including, but not limited to, endocarditis, meningitis, and, if it is widespread, sepsis - toxins infecting the entire body.

Fungi, e.g. *Candida albicans, Candida glabrata, Candida krusei,* also play a significant role in infections. Invasive candidiasis includes candidemia, disseminated candidiasis with deep organ involvement, endocarditis and meningitis. Invasive candidiasis has an attributable mortality of 40% to 50% and is increasingly reported in intensive care units. *Candida albicans* and non*-albicans* strains are both responsible for infections, where empirical and targeted treatments especially need to be initially appropriate.

In WO 00/10385, WO 2006/086250 and WO 2008/019083, catheter lock solutions containing a citrate salt as an anti-microbial agent have been proposed as a disinfectant. These solutions may comprise further agents having anti-microbial properties such as paraben, gentamicin or vancomycin.

A catheter lock solution comprising a combination of taurolidine, citric acid and sodium citrate is also known in the state of the art (commonly known as Taurolock™).

In US 2009/0170947 A1, a catheter lock solution containing a combination of ethylene diamine tetraacetic acid (EDTA) and poly(hexamethylenebiguanide) (PHMB) is disclosed.

EP 1 943 302 A2 discloses a material substrate having at least part of a surface treated with an antimicrobial compostion. The antimicrobial composition exhibits at least a 3 log 10 CFU reduction within a period of about 30 minutes after contact with various species of a broad spectrum of microorganisms.

US 5 576 006 A discloses complexes of antifungal or antimicrobial compounds having at least one site which is a quaternary ammonium, amine, a mixture thereof, or the salts thereof. The complexes are useful in compositions for deodorizing and/or preventing the growth of odor causing microbes or fungus. The compositions are particularly useful for deodorizing footwear.

US 5 700 742 A relates to antimicrobial treatment of textile material with an oligomeric or polymeric biguanide and a strong organic acid having a pK value below 4.5.

EP 0 707 794 A discloses a disinfectant composition containing ethyl alcohol with a concentration of not lower than 50% by weight, chlorhexidine, and an organic acid.

US 2003/096722 A1 relates to a process of disinfecting and/or cleaning of a hard surface with a composition comprising a biguanide antimicrobial agent, an essential oil or an active thereof and an organic acid or a salt thereof whereby immediate and/or long lasting disinfecting benefits are provided.

US 2007/098813 A1 relates to an ophthalmic solution including 0.00001 to about 3.0 percent by weight of a peroxide producing agent and 0.1 to 500 parts per million of a preservative.

EP 1 688 154 A1 relates to compositions, methods, devices and kits relating to the infusion of a catheter lock solution into an indwelling catheter. The compositions, methods, devices and kits aid in diminishing the effects of microbial infection in catheters and occlusion of the catheters. A lock solution includes citrate and a paraben. The solution preferably has a density suitable for retention of the solution in a catheter during the lock period. Another lock solution includes citrate, a paraben and a photo-oxidant, such as, for example, methylene blue

WO 2009/085318 A1 discloses disinfectant compositions comprising PHMB and EDTA salt(s). The disinfectant compositions have also demonstrated activity as enhanced, fast acting catheter lock/flush solutions. They are safe for human and medical uses and may be used as prophylactic preparations to prevent infection, or to reduce the proliferation of and/or eliminate existing or established infections.

There is a need for improved disinfectant compositions such as catheter lock solutions, that have advantages over disinfectant compositions of the prior art, particularly with respect to their anti-microbial effectiveness including their ability to penetrate or prevent biofilms, as well as a low cytotoxicity profile, in order to prevent and/or reduce and/or eliminate and/or eradicate microbial contaminations, particularly of *staphylococcus aureus.* As far as catheters are concerned, there is a particular need for catheter lock solutions that quickly exhibit their antimicrobial effect, e.g. their eradicating effect against *S. aureus.* The time aspect is of particular relevance, because in certain instances the catheters need to be reused frequently, e.g. after changing the infusion solution and the like.

It was, therefore, an object of the invention to provide disinfectant compositions capable of preventing and/or reducing and/or eliminating and/or eradicating microbial contaminations in medical healthcare products, and particularly in catheters, which compositions have advantages over the prior art. It was a further object of the invention to provide catheter lock solutions that have advantages compared to catheter lock solutions of the prior art.

In particular, it was an object to find disinfectant compositions, preferably catheter lock solutions, which exhibit an anti-microbial effect and e.g. inhibit the growth of biofilms and/or are able to penetrate biofilms in order to eradicate the microbes of said biofilms. It was a further object to find disinfectant compositions which are at least as anti-microbially effective as disinfectant compositions known from the prior art, but exhibit a less pronounced cytotoxicity profile.

These objects have been solved by the subject-matter of the patent claims.

### SUMMARY OF THE INVENTION

The invention relates to the use of a disinfectant composition, which is a solution
(i) comprising a combination of components
   (A) citric acid or a physiologically acceptable salt thereof, and
   (B) poly(hexamethylenebiguanide) or a physiologically acceptable salt thereof;
      wherein components A and B are present in an amount exhibiting a synergistic anti-microbial effect; and
(ii) preferably additionally exhibiting a log reduction of *Staphylococcus aureus* of at least 4.0 after
   a contact time of 5 minutes according to DIN EN 13727;
   and/or
   preferably additionally inhibiting growth of bacteria and/or fungi, preferably of *S. aureus* and/or *C. albicans*
as catheter lock solution.

It has been surprisingly found that the presence of components (A) and (B) in an anti-microbial effective amount results in a synergistic anti-microbial effect of the inventive disinfectant composition. Therefore, the disinfectant composition used in the invention is effective for the prevention and/or reduction and/or elimination and/or eradication of microbial contaminations in catheters (cf. example 2).

This beneficial effect is achieved in a surprisingly short period of time.

Further, it has been surprisingly found that the disinfectant composition used in the invention even exhibits a synergistic effect against the growth of fungi such as *C*. *albicans* (example 4). This is particularly surprising as citric acid or its physiologically acceptable salt typically do not exhibit such action.

Still further, it has been surprisingly found that the disinfectant composition used in the invention is less cytotoxic than commonly used disinfectant compositions (cf. example 3).

### DETAILED DESCRIPTION OF THE INVENTION

A first aspect of the invention relates to the use of a disinfectant composition, which is a solution
(i) comprising a combination of components
   (A) citric acid or a physiologically acceptable salt thereof, and
   (B) poly(hexamethylenebiguanide) or a physiologically acceptable salt thereof;
      wherein components (A) and (B) are present in an amount exhibiting a synergistic anti-microbial effect;
      and/or
(ii) preferably additionally exhibiting a log reduction of *staphylococcus aureus* of at least 4.0 after a contact time of 5 minutes according to DIN EN 13727;
   and/or
   preferably additionally inhibiting growth of bacteria and/or fungi, preferably of *S. aureus* and/or *C. albicans*
as catheter lock solution.

"Poly(hexamethylenebiguanide)" (commonly abbreviated as PHMB), also known as poly(amino-propylbiguanide) (PAPB), is a disinfectant known in the state of the art. Said term also includes physiologically acceptable salts of poly(hexamethylenebiguanide). PHMB is for instance commercially available as poly(hexamethylenebiguanide) hydrochloride (also known as "polyhexanide") in an aqueous solution having a concentration of polyhexanide of about 20%, i.e. having a concentration of polyhexanide of at least 19% and at most 21%. It is for example commercialized under the names of Cosmocil™ CQ and Cosmocil™ PG by Arch Chemicals.

According to the present invention, the term "poly(hexamethylenebiguanide)" preferably refers to at least one compound according to general formula (I) or a physiologically acceptable salt thereof as component (B) of the disinfectant composition, 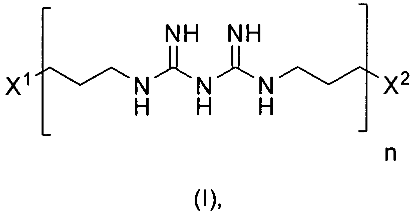 wherein
n is an integer of from 1 to 500, and
X¹ and X² are independently of one another selected from the group consisting of

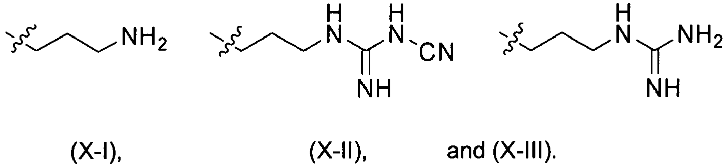

Physiologically acceptable salts according to the present invention in general include salts with physiologically acceptable acids as well as salts with physiologically acceptable bases. Physiologically acceptable salts according to the present invention are preferably watersoluble physiologically acceptable salts.

Those skilled in the art understand that citric acid is acidic in nature. Citric acid may form physiologically acceptable salts. Examples of such salts may include but are not limited to alkali metal salts, for example lithium, sodium or potassium salts, earth alkali metal salts, for example calcium or magnesium salts or salts with ammonia or amines such as alkyl amines. Since citric acid is a trivalent organic acid, a person skilled in the art understands that citric acid may form trivalent physiologically acceptable salts, i.e. salts with up to three cations as it is the case for alkali metal salts of citric acid. For example, a sodium salt of citric acid comprises monosodium citrate, disodium citrate and trisodium citrate. Citric acid may also form salts with divalent cations such as earth alkali metal salts, for example with calcium ions. In this case two molecules of deprotonated citric acid and three calcium ions may form a calcium salt of citric acid. Mixed salts of citric acid, i.e. salts with at least two different cations such as, for example a disodium monopotassium salt of citric acid are also within the scope of the present invention. Trialkali metal salts, in particular trisodium and tripotassium salts of citric acid are the most preferred salts.

Those skilled in the art further understand that certain basic compounds such as poly(hexa-methylenebiguanide) including compounds according to general formula (I) may also form physiologically acceptable salts, e.g. acid addition salts. For example, the imino-nitrogen atoms may form salts with strong acids, while other functional groups of PHMB including compounds according to general formula (I) such as amino groups may also form salts with weaker acids. Examples of suitable acids for salt formation are organic and inorganic acids and include but are not limited to hydrochloride acid, hydrobromide acid, sulfuric acid, phosphoric acid, boric acid, sulfonic acid, tartaric acid, acetic acid, propionic acid, citric acid, oxalic acid, malonic acid, salicylic acid, malic acid, fumaric acid, succinic acid, ascorbic acid, maleic acid, gluconic acid, lactic acid, methanesulfonic acid and other mineral and carboxylic acids well known to those skilled in the art. Methods for obtaining salts are also well known to those skilled in the art. Most preferred physiologically acceptable acid addition salts are hydrochlorides and citrates.

According to the present invention, the symbol 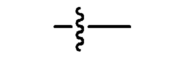 used in conjunction with general formula (I) refers to the connectivity of a specific residue or radical to general formula (I).

Both component (A) and component (B) of the disinfectant composition used in the invention may also form solvates such as hydrates, which are also within the scope of the present invention.

The disinfectant composition used in the invention is a solution.

A solution used according to the present invention is preferably an aqueous, an alcohol or a saline solution.

Most preferably, the disinfectant composition used in the invention is an aqueous solution. Accordingly, the disinfectant composition is a solution and said solution contains components (A) and (B).

Preferably, the disinfectant composition used in the invention is a solution that contains component (A) in an amount of 0.1 wt.-% to 15 wt.-%, more preferably in an amount of 0.5 wt.-% to 10 wt.-%, still more preferably in an amount of 1 wt.-% to 8 wt.-%, even more preferably in an amount of 2 wt.-% to 6 wt.-%, particularly in an amount of 3 wt.-% to 5 wt.-% as described for sodium citrate 4% concordant with USP monograph "Anticoagulant Sodium Citrate Solution".

In another preferred embodiment of the present invention, the disinfectant composition is a solution that contains component (A) in an amount of at most 15 wt.-%, preferably of at most 12 wt.-%, more preferably of at most 10 wt.-%, still more preferably of at most 8 wt.-%, even more preferably of at most 6 wt.-%, in particular of at most 5 wt.-%, and most preferred of at most 4.5 wt.-%, in each case relative to the total weight of the solution.

In still another preferred embodiment, the disinfectant composition is a solution that contains component (A) in an amount of 2.9±2.5 wt.-%, preferably of 2.9±2.0 wt.-%, more preferably of 2.9±1.5 wt.-%, still more preferably of 2.9±1.0 wt.-%, even more preferably of 2.9±0.5 wt.-%, in particular of 2.9±0.2 wt.-%, and most preferred of 2.9±0.1 wt.-%, in each case relative to the total weight of the solution.

In yet another preferred embodiment, the disinfectant composition is a solution that contains component (A) in an amount of 3.9±3.5 wt.-%, preferably of 3.9±3.0 wt.-%, more preferably of 3.9±2.5 wt.-%, still more preferably of 3.9±2.0 wt.-%, even more preferably of 3.9±1.5 wt.-%, in particular of 3.9±1.0 wt.-%, and most preferred of 3.9±0.5 wt.-%, in each case relative to the total weight of the solution.

In a further preferred embodiment, the disinfectant composition is a solution and contains component (A) in an amount of 3.4±3.0 wt.-%, preferably of 3.4±2.5 wt.-%, more preferably of 3.4±2.0 wt.-%, still more preferably of 3.4±1.5 wt.-%, even more preferably of 3.4±1.0 wt.-%, in particular of 3.4±0.7 wt.-%, and most preferred of 3.4±0.5 wt.-%, in each case relative to the total weight of the solution.

Higher concentrations of component (A) are also possible, particularly when the disinfectant composition to be used in the invention is provided as a concentrate that is to be diluted prior to use. In this regard, concentrations of component (A) of up to 40 wt.-%, preferably 30±25 wt.-%, 30±20 wt.-%, 30±15 wt.-%, 30±10 wt.-%, 30±5 wt.-%; 25±20 wt.-%, 25±15 wt.-%, 25±10 wt.-%, 25±5 wt.-%; 20±15 wt.-%, 20±10 wt.-%, 20±5 wt.-%; 15±10 wt.-% or 15±10 wt.-% are preferred.

Preferably, component (B) of the disinfectant composition used in the invention is at least one compound according to general formula (I) or a physiologically acceptable salt thereof.

In a preferred embodiment, component (B) has an average molecular weight M_{w} of at least 500 g/mol, preferably of at least 1 000 g/mol, more preferably of at least 1 500 g/mol, particularly of at least 2 000 g/mol, even more particularly of at least 2 500 g/mol.

In another preferred embodiment, component (B), has an average molecular weight M_{w} of at most 100 000 g/mol, preferably of at most 50 000 g/mol, more preferably of at most 15 000 g/mol, particularly of at most 10 000 g/mol, even more particularly of at most 5 000 g/mol.

In yet another preferred embodiment, component (B), has a weight average molecular weight M_{w} in the range of 500 g/mol to 50 000 g/mol, preferably in the range of 1 000 g/mol to 30.000 g/mol, more preferably in the range of 1 500 g/mol to 10.000 g/mol, even more preferably in the range of 2 000 g/mol to 5.000 g/mol.

Preferably, the integer n according to general formula (I) is in the range of from 1 to 500, preferably 2 to 400, more preferably, 3 to 300, still more preferably 4 to 200, even more preferably 5 to 100, particularly 6 to 50, more particularly 7 to 30, still more particularly 8 to 20, and even more particularly 9 to 15.

In another preferred embodiment, al least one of X¹ and X², preferably both X¹ and X², according to general formula (I) denote(s) radical (X-I).

In yet another preferred embodiment, al least one of X¹ and X², preferably both X¹ and X², according to general formula (I) denote(s) radical (X-II).

In still another preferred embodiment, al least one of X¹ and X², preferably both X¹ and X², according to general formula (I) denote(s) radical (X-III).

In a preferred embodiment of the present invention, the disinfectant composition contains at least one of the following compounds according to general formula (I) as a component (B) or a physiologically acceptable salt thereof: 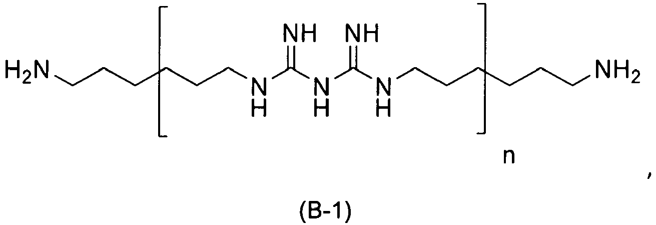 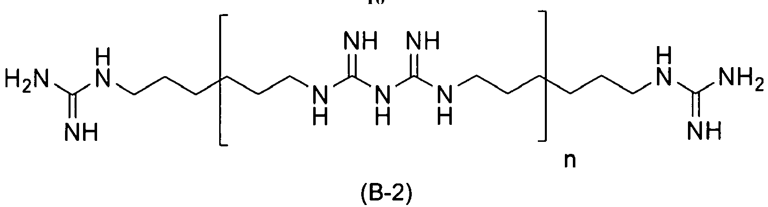 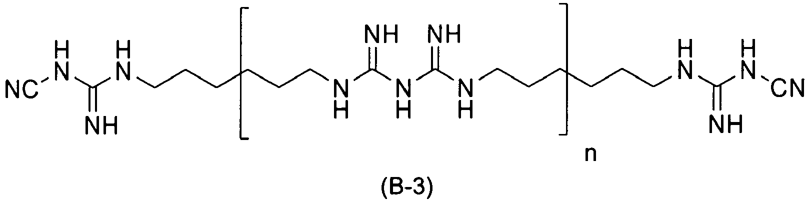 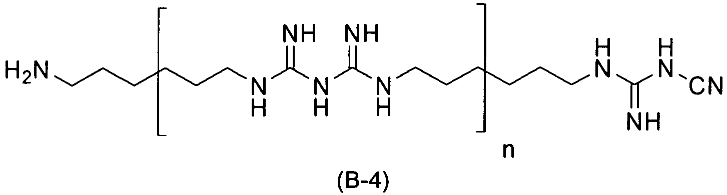 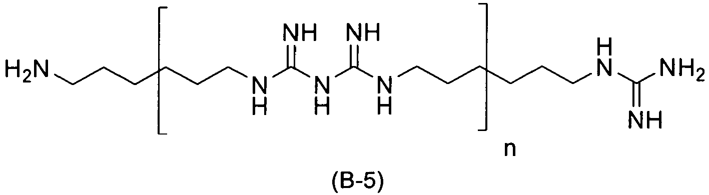 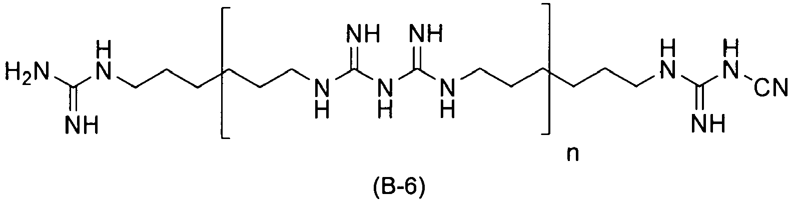 wherein the parameter n has in each case of (B-1) to (B-6) independently of one another one of the aforementioned meanings.

Most preferred compounds as component (B) of the composition to be used in the invention are compounds (B-1), (B-2) and (B-3), or physiologically acceptable salts thereof.

Preferably, the disinfectant composition is a solution and contains component (B) in an amount of 0.000001 wt.-% to 0.10 wt.-%, more preferably in an amount of 0.00001 wt.-% to 0.08 wt.-%, still more preferably in an amount of 0.0001 wt.-% to 0.07 wt.-%, even more preferably in an amount of 0.001 wt.-% to 0.05 wt.-%, particularly in an amount of 0.002 wt.-% to 0.04 wt.-%, and more particularly in an amount of 0.004 wt.-% to 0.02 wt.-%, in each case relative to the total weight of the solution.

In another preferred embodiment, the disinfectant composition is a solution and contains component (B) in an amount of at most 0.10 wt.-%, preferably of at most 0.08 wt.-%, more preferably of at most 0.06 wt.-%, still more preferably of at most 0.04 wt.-%, even more preferably of at most 0.01 wt.-%, in each case relative to the total weight of the solution.

In still another preferred embodiment, the disinfectant composition is a solution and contains component (B) in an amount of 0.050±0.045 wt.-%, preferably of 0.050±0.040 wt.-%, more preferably of 0.050±0.035 wt.-%, still more preferably of 0.050±0.030 wt.-%, even more preferably of 0.050±0.025 wt.-%, in particular of 0.050±0.020 wt.-%, and most preferred of 0.050±0.015 wt.-%, in each case relative to the total weight of the solution.

In yet another preferred embodiment, the disinfectant composition is a solution and contains component (B) in an amount of 0.010±0.008 wt.-%, preferably of 0.010±0.007 wt.-%, more preferably of 0.010±0.006 wt.-%, still more preferably of 0.010±0.005 wt.-%, even more preferably of 0.010±0.004 wt.-%, in particular of 0.010±0.003 wt.-%, and most preferred of 0.010±0.002 wt.-%, in each case relative to the total weight of the solution.

In a further preferred embodiment, the disinfectant composition is a solution and contains component (B) in an amount of 0.030±0.029 wt.-%, preferably of 0.030±0.028 wt.-%, more preferably of 0.030±0.027 wt.-%, still more preferably of 0.030±0.026 wt.-%, even more preferably of 0.030±0.025 wt.-%, in particular of 0.030±0.024 wt.-%, and most preferred of 0.030t0.023 wt.-%, in each case relative to the total weight of the solution.

However, the disinfectant composition may contain component (B) in higher concentrations, e.g. 0.5±0.3 wt.-%; 1.0±0.6 wt.-%, 1.0±0.3 wt.-%; 1.5±0.9 wt.-%, 1.5±0.6 wt.-%, 1.5±0.3 wt.-%; 2.0±1.2 wt.-%, 2.0±0.9 wt.-%, 2.0±0.6 wt.-%, 2.0±0.3 wt.-%; 2.5±1.5 wt.-%, 2.5±1.2 wt.-%, 2.5±0.9 wt.-%, 2.5±0.6 wt.-%, 2.5±0.3 wt.-%; 3.0±1.8 wt.-%, 3.0±1.5 wt.-%, 3.0±1.2 wt.-%, 3.0±0.9 wt.-%, 3.0±0.6 wt.-%, 3.0±0.3 wt.-%; 3.5±2.1 wt.-%, 3.5±1.8 wt.-%, 3.5±1.5 wt.-%, 3.5±1.2 wt.-%, 3.5±0.9 wt.-%, 3.5±0.6 wt.-%, 3.5±0.3 wt.-%; 4.0±2.4 wt.-%, 4.0±2.1 wt.-%, 4.0±1.8 wt.-%, 4.0±1.5 wt.-%, 4.0±1.2 wt.-%, 4.0±0.9 wt.-%, 4.0±0.6 wt.-%, 4.0±0.3 wt.-%; 4.5±2.7 wt.-%, 4.5±2.4 wt.-%, 4.5±2.1 wt.-%, 4.5±1.8 wt.-%, 4.5±1.5 wt.-%, 4.5±1.2 wt.-%, 4.5±0.9 wt.-%, 4.5±0.6 wt.-%, 4.5±0.3 wt.-%; 5.0±3.0 wt.-%, 5.0±2.7 wt.-%, 5.0±2.4 wt.-%, 5.0±2.1 wt.-%, 5.0±1.8 wt.-%, 5.0±1.5 wt.-%, 5.0±1.2 wt.-%, 5.0±0.9 wt.-%, 5.0±0.6 wt.-%, or 5.0±0.3 wt.-%.

Higher concentrations of component (B) are relevant e.g. when the disinfectant composition used according to the invention is provided as a concentrate that is to be diluted prior to use. In this regard, concentrations of component (B) of up to 40 wt.-%, preferably 30±25 wt.-%, 30±20 wt.-%, 30±15 wt.-%, 30±10 wt.%, 30±5 wt.-%; 25±20 wt.-%, 25±15 wt.-%, 25±10 wt.-%, 25±5 wt.-%; 20±15 wt.-%, 20±10 wt.-%, 20±5 wt.-%; 15±10 wt.-% or 15±10 wt.-% are preferred.

Preferably, the relative weight content of component (A) is greater than of component (B).

Preferably, the relative weight ratio of component (A) to component (B) is within the range of from 1000:1 to 40:1, more preferably from 750:1 to 100:1, more preferably 600:1 to 150:1, yet more preferably from 500:1 to 200:1, most preferably 450:1 to 250:1 and in particular from 400:1 to 290:1.

Further preferred ranges of the relative weight ratio of component (A) to component (B) are: 900±100:1, 900±75:1, 900±50:1, 900±25:1, 850±100:1, 850±75:1, 850±50:1, 850±25:1, 800±100:1, 800±75:1, 800±50:1, 800±25:1, 750±100:1, 750±75:1, 750±50:1, 750±25:1, 700±100:1, 700±75:1, 700±50:1, 700±25:1, 650±100:1, 650±75:1, 650±50:1, 650±25:1, 600t100:1, 600±75:1, 600±50:1, 600±25:1, 550±100:1, 550±75:1, 550±50:1, 550±25:1, 500±100:1, 500±75:1, 500±50:1, 500±25:1, 450±100:1, 450±75:1, 450±50:1, 450±25:1, 400±100:1, 400±75:1, 400±50:1, 400±25:1, 350±100:1, 350±75:1, 350±50:1, 350±25:1, 300±100:1, 300±75:1, 300±50:1, 300±25:1, 250±100:1, 250±75:1, 250±50:1, 250±25:1, 200±100:1, 200±75:1, 200±50:1, 200±25:1, 150±100:1, 150±75:1, 150±50:1, 150±25:1, 100±100:1, 100±75:1, 100±50:1, 100±25:1, 50±50:1, or 50±25:1.

In a preferred embodiment, the relative weight ratio of component (A) to component (B) is within the range of from 300±150:1, more preferably from 300±125:1, more preferably 300±75:1, yet more preferably 300±50:1, most preferably 300±25:1, and in particular 300±10:1.

In another preferred embodiment, the relative weight ratio of component (A) to component (B) is within the range of from 350±325:1, from 350±300:1, from 350±275:1, from 350±250:1, from 350±225:1, from 350±200:1, or from 350±175:1, more preferably from 350±150:1, more preferably 350±125:1, yet more preferably 350±100:1, most preferably 350±75:1, and in particular 350±50:1.

In yet another preferred embodiment, the relative weight ratio of component (A) to component (B) is within the range of from 390±150:1, more preferably from 390±125:1, more preferably 390±75:1, yet more preferably 390±50:1, most preferably 390±25:1, and in particular 390±10:1.

Preferably, the relative molar ratio of component (A) to component (B) is within the range of from 1:40 to 40:1, more preferably from 1:30 to 30:1, more preferably from 1:20 to 20:1, still more preferably from 15:1 to 1:15, yet more preferably from 10:1 to 1:10, most preferably from 6:1 to 1:6, and in particular from 3:1 to 1:3.

The disinfectant effect of the composition used according to the invention generally increases with the concentration of components (A) and (B). The higher their concentration, however, the higher is the risk for undesired effects such as cytotoxicity. Thus, the concentration and relative weight ratio of components (A) and (B) is advantageously chosen so that at optimized desired disinfectant activity undesired effects are minimized.

In a preferred embodiment the invention relates to the use of a disinfectant composition comprising a combination of components
(A) citric acid or a physiologically acceptable salt thereof, and
(B)poly(hexamethylenebiguanide) (PHMB) or a physiologically acceptable salt thereof.

In a preferred embodiment the invention relates to the use of a disinfectant composition comprising a combination of components
(A) citric acid or trisodium citrate, preferably citric acid mixed with a caustic alkali metal solution to a physiologically acceptable pH of 2 - 8, preferably 3 - 7, more preferably between 4 and 5, preferably in an amount of 1 wt.-% to 8 wt.-%, more preferably in an amount of 2 wt.-% to 6 wt.-%, and
(B) poly(hexamethylenebiguanide) (PHMB) or a physiologically acceptable salt thereof, preferably a compound according to general formula (I) or a physiologically acceptable salt thereof, preferably in an amount of 0.001 wt.-% to 0.05 wt.-%, more preferably in an amount of 0.002 wt.-% to 0.04 wt.-%.

In another preferred embodiment the invention relates to the use of a disinfectant composition exhibiting a log reduction of *staphylococcus aureus* of at least 4.0, more preferably at least 4.2, still more preferably at least 4.4, yet more preferably at least 4.6, most preferably at least 4.8, and in particular at least 5.0, in each case after a contact time of 5 minutes with the 100% use dilution in the presence of protein and blood according to DIN EN 13727.

According to the invention, components (A) and (B) are present in an amount exhibiting a synergistic anti-microbial effect, preferably with respect to growth inhibition of bacteria and/or fungi.

Preferably, due to said synergistic effect of components (A) and (B), the disinfectant composition used in the invention exhibits a log reduction of bacteria like *staphylococcus aureus* of at least 4.0 after a contact time of 5 minutes according to DIN EN 13727 with organic load and a growth inhibition of yeast and/or fungi like *candida albicans*.

DIN EN 13727 is concerned with a quantitative suspension test for the evaluation of bactericidial activity of chemical disinfectants for instruments used in the medical area. Preferably, the log reduction is determined according to DIN EN 13727 in the German version of 2003 (EN 13727:2003), more preferably according to the experimental section. The strain of *staphylococcus aureus* is preferably deposited under no. 799 at DSM.

Comparable products on the market showed less than 1 log reduction in the same test. Other comparable products showed comparable bacterial reduction rates but higher cytotoxic effects.

Synergism in general describes a situation where different entities cooperate advantageously for a final outcome. This means that the whole is greater than the *sum* of the individual parts (super additive effect). For the purpose of the specification, a synergistic effect shall encompass any super additive effect. A skilled person is aware of suitable methods to determine such effect, e.g. by means of isobologram analysis.

In yet another preferred embodiment the invention relates to a disinfectant composition inhibiting growth of bacteria and/or fungi, preferably of *S. aureus* and/or *C. albicans.* The growth inhibition is preferably determined in an agar-diffusion test, more preferably in accordance with the conditions of example 4. Preferably, the antifungal effect is determined in accordance with DIN EN 14561 or DIN EN 14562.

According to the present invention the term "microbial" refers to microorganisms such as bacterial and fungal organisms. Accordingly, the term "anti-microbial" refers to any agent, compound or any material that is capable of eradicating any of these microorganisms or at least inhibiting the growth of any of these microorganisms. Preferably, the term "anti-microbial" refers to a composition that kills (microbicidal) or inhibits the growth (microbistatic) of microorganisms such as bacteria, fungi, and/or protozoans and may optionally also destroy viruses.

The disinfectant composition used in the invention is a solution that has both a physiologically acceptable pH value as well as a pH value that is effective for the prevention and/or reduction and/or elimination and/or eradication of microbial contaminations and an acceptable low cytotoxic effect.

In a preferred embodiment, however, the disinfectant composition used in the invention is a solution that preferably contains a further acidifying agent, particularly if trisodiumcitrate is used, or a caustic agent if citric acid is used as precursor, preferably an organic or inorganic acid, more preferably selected from the group consisting of boric acid, phosphoric acid, sulfuric acid, hydrochloric acid and hydrobromic acid respectively alkaline solutions of alkaline or earth alkaline metal salts. The most preferred acidifying agent is hydrochloric acid, the most preferred alkaline solution is NaOH_{aq} in an amount that the preferred pH of 5 is achieved.

According to the invention the term "contamination" refers to microbial contaminations in solution as well as in deposits such as in biofilms. Such contaminations may e.g. induce microbial infections in humans and/or animals.

In a preferred embodiment the disinfectant composition used in the invention is a solution that has a pH value < 7, more preferably ≤ 6.5, still more preferably ≤ 6.0, particularly ≤ 5.0.

In another preferred embodiment the disinfectant composition used in the invention is a solution that has a pH value in the range of < 8 to ≥ 3.5, more preferably ≤ 7.5 to ≥ 5.0, still more preferably ≤ 7.5 to ≥ 7.0.

In yet another preferred embodiment, the disinfectant composition used in the invention is a solution that has a pH value which is within the range of 5.0±2.0, more preferably 5.0±1.0, still more preferably 5.0±0.5.

In a preferred embodiment, the disinfectant composition comprises alkali metal ions, preferably sodium ions, preferably sodium ions from a physiologically acceptable salt of citric acid as component (A). Preferably, the disinfectant composition used in the invention is a solution that has a concentration of alkali metal ions, preferably sodium ions, within the range of from 20 to 800 mM, more preferably from 40 to 500 mM, still more preferably from 50 to 400 mM, and in particular from 100 to 250 mM. In another preferred embodiment, the inventive disinfectant composition is a solution and does not contain any other alkali metal ions than sodium ions. In another preferred embodiment, however, the disinfectant composition is a solution and does not contain any alkali metal ions at all.

In another embodiment of the present invention the disinfectant composition comprises also earth alkali metal ions, preferably calcium ions, preferably calcium ions from a physiologically acceptable salt of citric acid as component (A), more preferably calcium ions from calcium citrate. In another preferred embodiment, the disinfectant composition is a solution and does not contain any other earth alkali metal ions than calcium ions. In another preferred embodiment, however, the disinfectant composition is a solution and does not contain any earth alkali metal ions at all.

In addition to its anti-microbial properties, the disinfectant composition used in the invention preferably exhibits also anti-coagulant properties.

The disinfectant composition in solution has anti-microbial, preferably anti-bacterial properties and is preferably effective against a wide spectrum of microorganisms, preferably bacteria, including but not limited to *Red. S. aureus, Red. E. hirae* and *Red. P. aeruginosa.* Preferably, both components A and B display such an anti-bacterial activity.

In a preferred embodiment, the disinfectant composition in solution may comprise further agents having anti-microbial and/or anti-coagulant properties, such as heparin, methylenblue and usually for conservation purposes used substances like papabenes (e.g. methylparabene, ethylparapene, propylparabene, etc.).

In another preferred embodiment, the disinfectant composition is a solution and does not comprise any further agents having anti-microbial and/or anti-coagulant properties.

The osmolality should be within the range of the osmolality of human blood between 800 and 200 mOsmol/kg, preferably at 270 to 330 mOsmol/kg, more preferably at 280 to 320 mOsmol/kg, yet more preferably at 290 to 310 mOsmol/kg. If components (A) and (B) do not per se provide for a sufficient osmolarity, the required value may be adjusted by means of sitable additives known to the skilled artisan, e.g. NaCl.

In case the disinfectant composition is a solution, the total volume of the solution is not particularly limited. Typical volumes range from 1 or 2 mL to several liters such as 1 or 2 liters. A preferred total volume is 1-10 mL ± 5%, most preferred is 1-3 mL ± 5%.

Preferably, the disinfectant composition is provided in a sterile form and may be packaged in any fashion. In case the inventive disinfectant composition is a solution, the composition is preferably packaged in the form of ampoules. In this case, said solution has a volume that allows it being applied immediately, i.e. to be ready-to-use. Sterilization and packaging techniques are known to a person skilled in the art. In another form the solution is preferably diluted with an appropriate amount of at least one carrier, preferably water.

The disinfectant composition used in the invention is used for the prevention and/or reduction and/or elimination and/or eradication of microbial, preferably bacterial, contaminations in catheters. In this regard, the term "contamination" encompasses any undesired material of biological origin.

The invention, therefore, relates to the use of the disinfectant composition for the prevention and/or reduction and/or elimination and/or eradication of microbial, preferably bacterial and/or fungal, contaminations in catheters.

The disinfectant composition is a catheter lock solution, i.e. is adapted for that purpose.

Accordingly, the disinfectant composition in solution is customized for being used as a catheter lock solution in catheters for the prevention and/or reduction and/or elimination and/or eradication of microbial, preferably bacterial and/or fungal, contaminations, in catheters.

The catheter lock solution may be provided in form of a concentrate or as a ready-to-use product. When the catheter lock solution is provided as a concentrate, it is to be diluted prior to use by addition of a suitable solvent, preferably water for injection purposes or an aqueous solution.

In a particularly preferred embodiment, the concentrated catheter lock solution contains the active ingredients, i.e. components (A) and (B), in the following concentrations:

| | |
|---|---|
| Component (A) | F x 2.856±Y g/1000mL |
| Component (B) (added in form of a pre-solution, 20% w/w) | F x 0.05±Y g/1000mL, |

wherein
- the pH value of the solution is adjusted to 5.0±0.3 by addition of a suitable base, preferably aqueous NaOH;
- F is a factor, preferably within the range of from 1 to 20, more preferably 2 to 18, still more preferably 5 to 15, most preferably 8 to 12 and in particular about 10; and
- Y is a margin for the value in [g/1000mL], preferably 50%, 45%, 40%, 35%, 30%, 25%, 20%, 15%, 10% or 5%.

The concentrate may be diluted prior to use by addition of a suitable solvent or solvent mixture, preferably water for injection purposes, thereby yielding a useful catheter lock solution that can be applied. Preferably, the concentrate is diluted by a ratio of from 1:2 to 1:10, more preferably 1:3 to 1:8, most preferably 1:3 to 1:5 and in particular about 1:4.

If necessary, however, the concentrate may be used as catheter lock solution without any prior dilution (ready-to-use).

A third aspect of the invention, therefore, relates to the use of a catheter lock solution comprising the disinfectant composition for the prevention and/or reduction and/or elimination and/or eradication of microbial, preferably bacterial and/or fungal, contaminations, in catheters.

A further aspect of the invention relates to a method of disinfecting and/or cleaning of catheters comprising the step of contacting a catheter with a catheter lock solution comprising the disinfectant composition.

Preferably, the method of disinfecting and/or cleaning of catheters comprises the steps of
a) contacting a catheter with a catheter lock solution comprising the disinfectant composition;
b) holding the catheter lock solution within at least one lumen of the catheter for a period of time, preferably for at least 1 h; and
c) removing the catheter lock solution from the lumen of the catheter.

The catheter lock solution can be used in any kinds of catheters known in the state of the art including but not limited to catheters for short-term and long-term use such as indwelling catheters, catheters for intravenous therapy, central venous catheters, catheters that are inserted peripherically, urinary catheters, hemodialysis catheters and peritoneal catheters. These catheters may comprise one or more lumen, i.e. may be for instance one- and dual-lumen catheters.

The following example further illustrates the invention but is not to be construed as limiting its scope.

### Example 1 - Manufacturing

Disinfectant composition in a batch solution (1000 mL) (raw material solution) according to Table 1:

**Table 1**

| **no.** | **components** | **amount** |
|---|---|---|
| 1 | Citric acid •1 H₂O (component (A)) | 28.56 g |
| 2 | water | 400 g |
| 3 | polyhexanid solution (20%, Cosmocil™ PG)) (component (B)) | 0.5 g |
| 4 | 40% NaOH_{aq} (alkalic agent) | app. 65 g (ad pH 5.0 ± 0.3) |
| 5 | water | add to 1000 g |

Another manufacturing method is described in Table 2:

**Table 2**

| **no.** | **components** | **amount** |
|---|---|---|
| 1 | trisodium citrate •2 H₂O (component (A)) | 39.0 g |
| 2 | water | 800 g |
| 3 | polyhexanid solution (20%, Cosmocil™ PG)) (component (B)) | 0.5 g |
| 4 | hydrochloric acid (acidifying agent) | ca. 145 g (pH 5.0 ± 0.3) |
| 5 | water | add to 1000 mL |

### Preparation of the raw material solution according to Table 2:

A mixing tank is filled with an amount of water (800 g) sufficient for injections (no. 2 in Table 1). 39.0 g trisodium citrate •2 H₂O as component (A)), 0.5 g of a polyhexanid solution (20%, Cosmocil™ PG) and ca. 145 g of hydrochloric acid are added to the water (no. 1,3, and 4 in Table 1). The mixture is agitated until all components are completely dissolved. The tank is filled to the final volume of 1000 mL with water for injections and the mixture is agitated again. The solution is then filtered through a 0.45 µm polyethylene filter and filled into 2-mL ampoules. All pre-cleaned lines, filter and filling machines are flushed with the solution prior to filling of the ampoules.

### In-process controls

The pH value of the bulk solution is measured. A filter integrity test is performed before and after filling. The first and the last filled units of each batch (2 mL-ampoules) are withdrawn for bioburden testing (see below). The fill volume of each ampoule is checked by weight control of filled ampoules at defined intervals, wherein the following limits apply: fill volume 2 mL ± 5%. At specified time intervals, some units are withdrawn and tested for possible leaks and visual particulate matter.

### Sterilization

All filled units (2 mL-ampoules) are sterilized within a validated steam-sterilization process.

### Product specification

Disinfectant composition in solution (2mL ± 5%) containing 4 wt.-% citrate and 0.01 wt.-% PHMB (Table 3):

**Table 3**

| | **components** | **amount** |
|---|---|---|
| | citric acid (component (A)) | 228.56 mg/mL |
| | PHMB (component (B)) | 0.1 g/kg |

The amount of PHMB is measured by UV absorption at the maximum value of the raw material batch solution (measured in 4 wt.-% citrate diluted with water (1:10)).

The pH value of the solution is in the range of 4.8 to 5.2 (measured according to Ph.Eur. 2.2.2).

The solution is clear (measured according to Ph.Eur. 2.2.1 or 11.03.012), essentially free of visible particles (measured according to Ph.Eur. 2.9.20).

### Example 2 - quantitative suspension tests (according to DIN EN 13727)

A quantitative suspension test in order to evaluate the anti-microbial activity of the inventive disinfectant composition as well as comparative disinfectants containing only one of the components (A) and (B) for instruments and products used in the medical and healthcare area such as catheters were performed according to DIN EN 13727.

A suspension of microorganisms (here: *S*. *aureus* (*staphylococcus aureus*) as test strain) containing 0.3% albumin + 0.3% sheep erythrocytes is added to each one of three solutions (**S1, S2** and **S3**) or diluted solutions of **S1-S3,** i.e. solutions **S1-S3** with a test concentration of 50% and 25%, respectively, for a certain contact period.

| | |
|---|---|
| **S1** (Solution 1): | disinfectant composition according to the present invention comprising trisodium citrate (4 wt.-%) as component (A) and PHMB (0.04 wt.-%) as component (B) (100%) |
| **S2** (Solution 2): | disinfectant comprising PHMB (0.04 wt.-%) (component (B) only) (100%) |
| **S3** (Solution 3): | disinfectant comprising trisodium citrate (4 wt.-%) (as component (A) only) (100%) |

Samples of each (diluted) solution **S1-S3** (now mixed with the test strain) are taken at specific contact times (5, 15 and 30 min) and the bacterial activity of each sample is determined by serially diluting the samples and plating the samples to assess the log reduction of the bacteria in each sample.

Table 4 shows a summary of the log reductions of the quantitative suspension tests for diluted solutions of **S1-S3** according to DIN EN 13727 (Target: 5 log reductions).

**Table 4**

| *Contact time [min]* | **S1** (50%)* | **S1** (25%)* | **S2** (50%)* | **S2** (25%)* | **S3** (50%)* | **S3** (25%)* |
|---|---|---|---|---|---|---|
| 5 | >5.49 | 5.07 | 2.72 | 2.47 | <1.00 | <1.00 |
| 15 | >5.49 | >5.49 | >5.49 | >5.49 | <1.00 | <1.00 |
| 30 | >5.49 | >5.49 | >5.49 | >5.49 | <1.00 | <1.00 |

| | | | | | | |
|---|---|---|---|---|---|---|
| *50% = 50% test concentration *25% = 25% test concentration | | | | | | |

### Example 3 - cytotoxicity test (according to EN ISO 10993-5)

A cytotoxicity evaluation test in order to evaluate the cytotoxicity of the inventive disinfectant composition as well as a comparative disinfectant containing only component (A) as well as a commercially available Taurolock™ solution for instruments and products used in the medical and healthcare area such as catheters according to EN ISO 10993-5 was performed.

**Table 5**

| | | | | | | |
|---|---|---|---|---|---|---|
| 25% of **S1** diluted with citric acid **4%** [% test concentration] | 50.00% | 16.67% | 5.56% | 1.85% | 0.62% | 0.21% |
| Inhibition of proliferation [%] | 100 | 100 | 69 | 24 | 6 | 2 |
| | | | | | | |
| **S3** [% test concentration] | 50.00% | 16.67% | 5.56% | 1.85% | 0.62% | 0.21% |
| Inhibition of proliferation [%] | 100 | 100 | 55 | 13 | 4 | 0 |
| Taurolock™ [% test concentration] | 21.00% | 7.00% | 2.33% | 0.78% | 0.26% | 0.09% |
| Inhibition of proliferation [%] | 100 | 100 | 100 | 100 | 100 | 63 |

The above experimental data demonstrate that the compositions according to the invention
- exhibit a far stronger antimicrobial effect than comparative compositions only containing citric acid or physiologically acceptable salts thereof, such as commercial products Duralock^{®} and Citralock^{®}; and
- exhibit a substantially lower cytotoxicity than comparative compositions containing combinations of citric acid with other known disinfectants, such as taurolidine (e.g., commercial product Taurolock^{®}).

EN ISO 10993-5 describes test methods for determining cytotoxicity of medicinal products. Culture cells are incubated either a) with extracts of a medicinal product or b) in contact with a medicinal product. According to the invention, the test is preferably performed according to EN ISO 10993-5 in the German version 1999.

### Example 4 - Bacteriostatic and levurostatic activity

A comparison of the growth inhibition was performed in a agar-diffusion test with 1 mL of an 1:50 dilluted 24h culture of the test organisms *Candida albicans* ATCC 10231 and *Staphylococcus aureus* ATCC 6538 plated on the surface of an agar plate.

4 holes each with a diameter of 8 mm where punched out of the agar plate and filled with 0.1 mL of the test solution. After a waiting time of 3 hours the agar-plates where breed at 36°C over night.

The resulting zone of inhibition was measured in mm:

**Table 6**

| | PHMB 0,01% (25% of S2 diluted with water): Zone of inhibition in mm | Na-Citrate 4% (100% S3): Zone of inhibition in mm | Intralock with 0,01% PHMB (25% of S1 diluted with S3): Zone of inhibition in mm |
|---|---|---|---|
| *S. aureus* | 14 / 12 | 22 / 15 | 24 / 19.6 |
| *C. albicans* | 16.4 / 17 | 0 / 0 | 22 / 20.5 |

Each value was calculated by the median of 4 values 2 times.

The above experimental data demonstrate that Na-Citrate as such does not have any effect against *C. albicans,* while in combination with PHMB there is a surprising synergistic effect. Thus, it appears that the antifungal effect of PHMB can be enhanced by the presence of citric acids and its salts, respectively.

## Claims

1. Use of a disinfectant composition, which is a solution and which comprises a combination of components
(A) citric acid or a physiologically acceptable salt thereof, and
(B) poly(hexamethylenebiguanide) or a physiologically acceptable salt thereof;
wherein components (A) and (B) are present in an amount exhibiting a synergistic anti-microbial effect;
as a catheter lock solution.

2. Use according to claim 1, wherein component (B) is a compound according to general formula (I) or a physiologically acceptable salt thereof 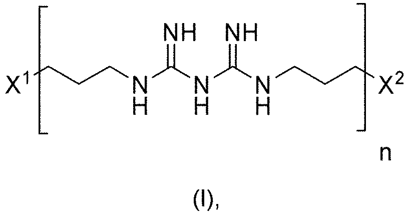 wherein
n is an integer of from 1 to 500, and
X¹ and X² are independently of one another selected from the group consisting of

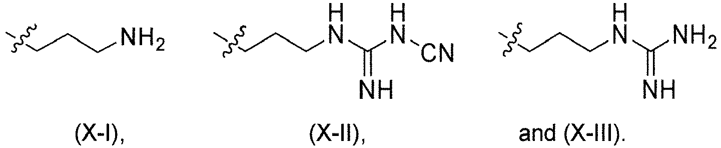

3. Use according to any of the preceding claims, wherein the solution contains component (B) in an amount of 0.000001 wt.-% to 0.10 wt.-%, relative to the total weight of the solution.

4. Use according to any of the preceding claims, wherein component (B) has a weight average molecular weight M_{w} in the range of 500 g/mol to 50 000 g/mol.

5. Use according to any of the preceding claims, wherein the solution contains component (A) in an amount of 0.1 wt.-% to 15 wt.-%, relative to the total weight of the solution.

6. Use according to any of the preceding claims, wherein the solution comprises sodium ions.

7. Use according to any of the preceding claims, wherein the solution has a pH value in the range of < 8 to ≥ 2.5.

8. Use according to any of the preceding claims, wherein the solution has a osmolarity within the range of from 270 to 330 mOsmol/kg.

## Patentansprüche

1. Verwendung einer Desinfektionszusammensetzung, die als Lösung vorliegt und eine Kombination der Komponenten
(A) Zitronensäure oder deren physiologisch verträgliche Salze, und
(B) Polyhexamethylenbiguanid oder dessen physiologisch verträgliche Salze
umfasst;
wobei die Komponenten (A) und (B) in einer Menge vorliegen, die eine synergistische antimikrobielle Wirkung aufweist;
als Kathetersperrlösung.

2. Verwendung gemäß Anspruch 1, wobei die Komponente (B) eine Verbindung gemäß der allgemeinen Formel (I) oder einer ihrer physiologisch verträglichen Salze ist 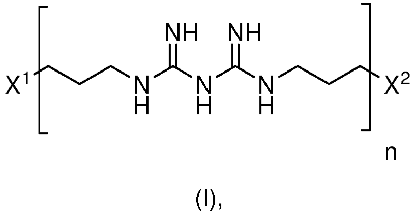 wobei
n eine Ganzzahl von ab 1 bis 500 ist, und
X¹ und X² unabhängig voneinander ausgewählt werden aus der Gruppe bestehend aus

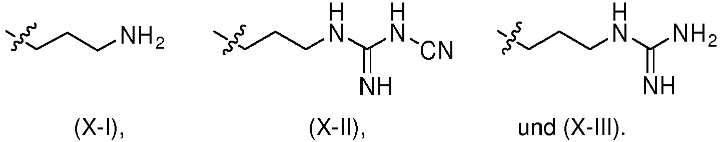

3. Verwendung gemäß einem der vorhergehenden Ansprüche, wobei die Lösung die Komponente (B) in einer Menge von 0,000001 Gew.-% bis 0,10 Gew.-% enthält, im Verhältnis zum Gesamtgewicht der Lösung.

4. Verwendung gemäß einem der vorhergehenden Ansprüche, wobei die Komponente (B) ein gewichtsmittleres Molekulargewicht M_{w} im Bereich von 500 g/mol bis 50 000 g/mol aufweist.

5. Verwendung gemäß einem der vorhergehenden Ansprüche, wobei die Lösung die Komponente (A) in einer Menge von 0,1 Gew.-% bis 15 Gew.-% enthält, im Verhältnis zum Gesamtgewicht der Lösung.

6. Verwendung gemäß einem der vorhergehenden Ansprüche, wobei die Lösung Natriumionen umfasst.

7. Verwendung gemäß einem der vorhergehenden Ansprüche, wobei die Lösung einen pH-Wert im Bereich von < 8 bis ≥ 2,5 aufweist.

8. Verwendung gemäß einem der vorhergehenden Ansprüche, wobei die Lösung eine Osmolarität im Bereich von ab 270 bis 330 mOsmol/kg aufweist.

## Revendications

1. Utilisation d'une composition de désinfectant, qui est une solution et qui comprend une combinaison de composants
(A) d'acide citrique ou d'un sel physiologiquement acceptable de celui-ci, et
(B) de poly(hexaméthylènebiguanide) ou d'un sel physiologiquement acceptable de celui-ci ;
où les composants (A) et (B) sont présents selon une quantité présentant un effet antimicrobien synergique ; comme solution de remplissage de cathéter.

2. Utilisation selon la revendication 1, dans laquelle le composant (B) est un composé répondant à la formule générale (I) ou un sel physiologiquement acceptable de celui-ci 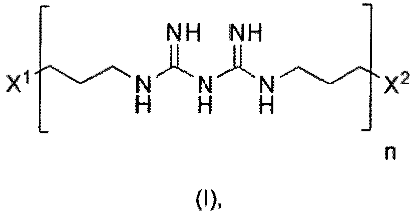 où
n est un nombre entier allant de 1 à 500, et
X¹ et X² sont choisis indépendamment l'un de l'autre dans le groupe constitué par

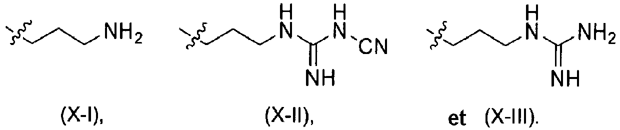

3. Utilisation selon l'une quelconque des revendications précédentes, dans laquelle la solution contient le composant (B) selon une quantité allant de 0,000001% en poids à 0,10% en poids par rapport au poids total de la solution.

4. Utilisation selon l'une quelconque des revendications précédentes, dans laquelle le composant (B) possède un poids moléculaire moyen en poids M_{w} dans la plage allant de 500 g/mol à 50 000 g/mol.

5. Utilisation selon l'une quelconque des revendications précédentes, dans laquelle la solution contient le composant (A) selon une quantité allant de 0,1% en poids à 15% en poids par rapport au poids total de la solution.

6. Utilisation selon l'une quelconque des revendications précédentes, dans laquelle la solution comprend des ions sodium.

7. Utilisation selon l'une quelconque des revendications précédentes, dans laquelle la solution possède une valeur de pH dans la plage allant de <8 à ≥ 2,5.

8. Utilisation selon l'une quelconque des revendications précédentes, dans laquelle la solution possède une osmolarité dans la plage allant de 270 à 330 mOsmol/kg.
